(19) **Europäisches Patentamt**
**European Patent Office**
**Office européen des brevets**

(11) **EP 3 381 871 A1**

(12) **EUROPEAN PATENT APPLICATION**
published in accordance with Art. 153(4) EPC

(43) Date of publication:
**03.10.2018 Bulletin 2018/40**

(21) Application number: **16868588.1**

(22) Date of filing: **24.11.2016**

(51) Int Cl.:
*C03C 3/062* (2006.01)   *C03C 3/064* (2006.01)
*C03C 3/066* (2006.01)   *C03C 3/097* (2006.01)
*C03C 3/112* (2006.01)   *G02B 1/00* (2006.01)

(86) International application number:
**PCT/JP2016/084716**

(87) International publication number:
**WO 2017/090645 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.11.2015 JP 2015229150**

(71) Applicant: **AGC Inc.**
**Tokyo 100-8405 (JP)**

(72) Inventors:
- **AKIBA Shusaku**
  **Tokyo 100-8405 (JP)**
- **NAGASHIMA Tatsuo**
  **Tokyo 100-8405 (JP)**
- **SAWAMURA Shigeki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **OPTICAL GLASS**

(57)     Provided is an optical glass suitable for an imaging lens or the like used for a vehicle-mounted camera exposed to harsh environment, having a high refractive index and high strength, excellent crack resistance, and a sufficiently low glass transition point and devitrification temperature. In the optical glass, nd is 1.70 or more and 2.10 or less, Tg is 500°C or more and 630°C or less, the devitrification temperature is 1300°C or less, a specific gravity is 4.0 g/cm$^3$ or less, a crack initiation load (CIL) is 20 gf or more, and a fracture toughness value (Kc) is 0.60 MPa·m$^{1/2}$ or more.

EP 3 381 871 A1

**Description**

TECHNICAL FIELD

The present invention relates to an optical glass.

BACKGROUND

Conventionally, a small-sized imaging glass lens with wide imaging angle of view has been used for purposes such as a vehicle-mounted camera and a robot visual sensor. A high refractive index is required for the imaging glass lens to enable photographing a wide range with a smaller-sized imaging glass lens. The high refractive index is also required for wearable equipment or the like from viewpoints of a wide-angle, high-luminance and high-contrast image, improvement in light-guide properties, easiness in process of diffractive optical elements, and so on.

The imaging glass lens mounted on a vehicle-mounted camera or the like is required to be extremely high strength compared to an imaging lens of a general camera because an automobile and a robot are assumed to move in high-speed or to be used under harsh environment. For example, regarding the vehicle-mounted camera, it is required that damage, erosion, and so on do not occur due to impact and wind pressure in accordance with driving of the automobile, or sand and dust splashed by driving. It is also important that there is less surface deterioration or alteration due to acid precipitation and chemicals such as detergent and wax used for car wash, or the like.

Scenes such that a user accidentally drops down wearable equipment, or fouling such as sebum, sandy dust are wiped off from wearable equipment are assume. Therefore, a glass with high strength and high abrasion resistance is demanded also in case of an optical waveguide plate, a glass with diffractive optical elements and lenses for glasses to be mounted in wearable equipment, as same as the lens for the vehicle-mounted camera.

For example, it has been tried to increase the refractive index and the strength, and further to improve acid resistance and water resistance by using a lens glass material for a vehicle-mounted camera having a predetermined acid resistance, regarding the vehicle-mounted glass lens (for example, refer to Reference 1).

However, the sufficiently high refractive index cannot be obtained by the glass lens using the lens glass material for the vehicle-mounted camera. On the other hand, there has been conventionally a problem that the glass is fragile and likely to be broken when the glass has a high-refractive-index composition. A glass having high strength capable of enduring harsh environment with high-refractive-index composition has not therefore been known.

The glass lens is mainly produced by a precise press molding (hereinafter, it is just called "press molding") whose manufacturing efficiency is high. Accordingly, low glass transition point and low devitrification temperature are demanded for an optical glass for a glass lens in order to increase productivity of the press molding.

RELATED REFERENCE

PATENT REFERENCE

Reference 1:JP-A 2013-256446

SUMMARY

PROBLEMS TO BE SOLVED BY THE INVENTION

The present invention is made to solve the above-stated problems, and an object thereof is to provide an optical glass which has a high refractive index and high strength, with excellent crack resistance, and good moldability.

MEANS FOR SOLVING THE PROBLEMS

An optical glass of the present invention has: a refractive index (nd) of 1.70 to 2.10; a glass transition point (Tg) of 500°C to 630°C; a devitrification temperature of 1300°C or less; a specific gravity of 4.0 $g/cm^3$ or less; a crack initiation load (CIL) of 20 gf or more; and a fracture toughness value (Kc) measured by an indentation fracture method based on JIS R1607 of 0.60 $MPa \cdot m^{1/2}$ or more.

The optical glass of the present invention preferably contains, in mass% based on oxides: $Nb_2O_5$: 20% to 75%; $SiO_2$: 22% to 50%; $TiO_2$: 0% to 7%; $ZrO_2$: 0% to 20%; $Li_2O$: 1% to 20%; $Na_2O$: 1% to 18%; $K_2O$: 0.1% to 10%; $ZnO$: 0% to 15%; $P_2O_5$: 0% to 5%; $B_2O_3$: 0% to 6%; and F: 0% to 5%, wherein $Li_2O + Na_2O + K_2O$ is 5% to 30%, and $Li_2O / (Li_2O + Na_2O + K_2O)$ is 0.4 or more.

In the optical glass of the present invention, ZnO is 0% to 10%, and $Li_2O / (Li_2O + Na_2O + K_2O)$ is preferably

0.45 or more.

The optical glass of the present invention preferably contains, in mass% based on oxides: $La_2O_3$: 0% to 15%; BaO: 0% to 4%, wherein $Nb_2O_5$ - ($La_2O_3$ + BaO) is 10% to 75%.

In the optical glass of the present invention, in mass% based on oxides: $Nb_2O_5$ - ($La_2O_3$ + BaO) is preferably 30% to 75%.

In the optical glass of the present invention, in mass% based on oxides: ($Nb_2O_5$ - ($La_2O_3$ + BaO)) $\times$ $Li_2O$ / ($Li_2O$ + $Na_2O$ + $K_2O$) is preferably 5 or more.

In the optical glass of the present invention, in mass% based on oxides: ($Nb_2O_5$ - ($La_2O_3$ + BaO)) $\times$ $Li_2O$ / ($Li_2O$ + $Na_2O$ + $K_2O$) is preferably 20 or more.

The optical glass of the present invention preferably contains, in mass% based on oxides: $Ln_2O_3$: 0% to 15% (here, Ln is one or more selected from a group made up of Y, La, Gd, Yb, and Lu); and $WO_3$: 0% to 10%, wherein ($Nb_2O_5$ + $Ln_2O_3$ + $Ti_2O$ + $ZrO_2$ + $WO_3$ + ZnO) $\times$ $Li_2O$ is 500 or less.

In the optical glass of the present invention, transmittance of light at a wavelength of 360 nm ($T_{360}$) of the optical glass formed into a glass plate with a thickness of 1 mm is preferably 50% or more.

In the optical glass of the present invention, water resistance is class 2 or more, and acid resistance is class 1 or more each measured based on Japanese Optical Glass Industrial Standards.

EFFECT OF THE INVENTION

According to the present invention, an optical glass which has a high refractive index and high strength, excellent crack resistance, and good moldability can be provided. The optical glass is therefore suitable for an imaging lens used for a vehicle-mounted camera which is exposed to harsh environment.

DETAILED DESCRIPTION

Hereinafter, embodiments of an optical glass of the present invention are described.

The optical glass of this invention has a high refractive index (nd) in a range of 1.70 to 2.10. The optical glass of this invention is therefore able to photograph a wide range with a small-sized lens when it is used for an imaging glass lens, or the like. The nd is preferably 1.72 or more, more preferably 1.73 or more, further preferably 1.74 or more, and still further preferably 1.75 or more. The nd is preferably 2.00 or less, and more preferably 1.90 or less.

The optical glass of this invention has a low glass transition point (Tg). Concretely, the Tg is in a range of 500 to 630°C. The low Tg in the aforementioned range enables the optical glass of this invention to have, for example, good moldability in press molding. The Tg of the optical glass of this invention is preferably 520°C to 600°C. The Tg can be measured by, for example, a thermal expansion method.

A devitrification temperature of the optical glass of this invention is 1300°C or less. Since devitrification of the glass at the press molding can be suppressed, the moldability becomes good. The devitrification temperature is preferably 1250°C or less, further preferably 1200°C or less, and particularly preferably 1100°C or less. Here, the devitrification temperature is a maximum value of a temperature where no crystal with a size of 1 $\mu$m or more in a long edge or a major axis is found at a surface and an inside of the glass when heated and melted glass is left standing to cool naturally.

A fracture toughness value (Kc) of the optical glass of this invention measured by an indentation fracture method (IF method) based on JIS R1607 is 0.60 MPa·m$^{1/2}$ or more. The Kc is an index of strength of the glass, and a large crack is unlikely to occur and higher resistance to breakage is shown as the Kc is the larger. The Kc is preferably 0.62 MPa·m$^{1/2}$ or more. The Kc is found as described below regarding, for example, a glass plate with a thickness of 4 to 10 mm, and a size of about 4 cm $\times$ 4 cm, through the IF method based on JIS R1607. That is, a Vickers hardness meter is used, an indentation is introduced at an indentation load of 5 kgf, for a retention time of 15 seconds by a Vickers indenter, then the Vickers indenter is removed, and a diagonal line length and a crack length of the indentation are measured after waited for 15 seconds by using a microscope attached to a tester. This measurement is repeated for 10 times, and the Kc is calculated by the following expression.

$$Kc = 0.026 \times (E \times P)^{1/2} \times a \times c^{-3/2} \qquad \text{... expression (1)}$$

Here, E is Young's modulus (Pa) of the glass plate being a sample, P is the indentation load (N), a is a half of an average of the diagonal line lengths of the indentation (m), and c is a half of an average of the crack lengths (m). The Young's modulus (E) is measured by an ultrasonic pulse method regarding the glass plate.

In the optical glass of this invention, the load of the Vickers indenter (the load is called a crack initiation load (CIL)) is 20 gf or more when an incidence of cracks when the indentation is formed by using the Vickers indenter on a mirror-polished surface of a glass plate with a thickness of 1 mm is 50%. The CIL is an index of crack resistance, and the crack is unlikely to occur as the CIL is larger. The optical glass of this invention has excellent crack resistance owing to the CIL of 20 gf or more. The CIL is preferably 25 gf or more, more preferably 30 gf or more, and further preferably 35 gf or more. When the CIL is 100 gf or more, the crack is difficult to be generated, and cutting and processing become difficult. The CIL is therefore preferably 90 gf or less, and more preferably 80 gf or less.

A value of the CIL is found by, for example, the following method. The Vickers indenter is pressed into a surface of a plate-shaped glass with a thickness of 1 mm whose both surfaces are mirror polished by using a Vickers hardness tester for 15 seconds, then the Vickers indenter is removed, and around the indentation is observed after 15 seconds has passed since the Vickers indenter is removed. An average value of the occurred number of cracks with respect to each of the indentation loads of 100 gf, 200 gf, 300 gf, 500 gf, 1000 gf, 2000 gf of the Vickers indenter is calculated by each load. A regression calculation is performed regarding a relationship between the load and the number of cracks by using a sigmoid function, and the load when the number of cracks becomes two can be set as the CIL (gf) of the glass from the regression calculation result (the incidence is regarded as 100% when four cracks in total occur from all of four corners of the indentation).

In a conventional composition of a high-refractive-index glass having the aforementioned nd, there are defects such that cracks are likely to occur at the glass surface, and the glass is likely to be broken originated from the occurred crack. On the other hand, since the optical glass of this invention has the Kc, the CIL in the aforementioned ranges, the high refractive index can be obtained and it is high strength and excellent in crack resistance.

The optical glass of this invention has a specific gravity of 4.0 $g/cm^3$ or less. Cracks are thereby unlikely to occur at the optical glass. Accordingly, there can be obtained the optical glass with high strength where breakage originated from the crack is unlikely to occur. The specific gravity is preferably 3.7 $g/cm^3$ or less, and more preferably 3.5 $g/cm^3$ or less.

Transmittance of light at a wavelength of 360 nm ($T_{360}$) of the optical glass of this invention formed into the glass plate with a thickness of 1 mm is preferably 50% or more, more preferably 55% or more, and further preferably 60% or more. The $T_{360}$ can be measured by using a spectrophotometer regarding, for example, a glass plate with a thickness of 1 mm whose both surfaces are mirror polished.

Water resistance (WR) of the optical glass of this invention measured based on a measuring method (powder method) of chemical durability of an optical glass of JOGIS06-2008 is preferably class 2 or more. The RW is concretely measured as follows. A mass decrease rate (%) when glass powder with a diameter of 420 to 600 μm is immersed in 80 mL of pure water at 100°C for one hour is measured. A predetermined class is supplied in accordance with the mass decrease rate. The smaller a numeric value of the class is, the better RW is.

Acid resistance (RA) of the optical glass of this invention measured based on the measuring method (powder method) of chemical durability of an optical glass of JOGIS06-2008 is preferably class 1 or more. The RA is concretely measured as follows. A mass decrease rate (%) when glass powder with a diameter of 420 to 600 μm is immersed in 80 mL of 0.01 normal aqueous solution of nitric acid at 100°C for one hour is measured. A predetermined class is supplied in accordance with the mass decrease rate. The smaller a numeric value of the class is, the better RA is.

[Glass component]

Next, the following describes an embodiment of a composition range of each component which can be contained by the optical glass of this invention in detail. In this description, a content ratio of each component is represented by mass% with respect to all the mass of the glass based on oxides unless otherwise specified. In the optical glass of this invention, "substantially not contained" means that the component is not contained except for inevitable impurities. A content of inevitable impurities is 0.1% or less in this invention.

The following describes limitation reasons of a composition in the optical glass of this embodiment. The optical glass of this invention is not limited to the composition of the following embodiment as long as it has the above-stated properties.

$SiO_2$ is a glass network former, and is a component increasing strength and crack resistance to the glass, and improving stability and chemical durability of the glass. A content ratio of $SiO_2$ is 22% or more and 50% or less. When the content ratio of $SiO_2$ is 22% or more, the crack resistance can be improved. On the other hand, when the content ratio of $SiO_2$ is 50% or less, a high refractive index can be obtained. The content ratio of $SiO_2$ is preferably 25% or more, and more preferably 28% or more. The content ratio of $SiO_2$ is preferably 45% or less, more preferably 40% or less, and further preferably 35% or less.

$Nb_2O_5$ is a component increasing the refractive index of the glass, and enlarging dispersion of the glass. A content ratio of $Nb_2O_5$ is 20% or more and 75% or less. When the content ratio of $Nb_2O_5$ is 20% or more, the high refractive index can be obtained. The content ration of $Nb_2O_5$ is preferably 30% or more, more preferably 40% or more, and further preferably 45% or more. When $Nb_2O_5$ is contained too much, devitrification is likely to occur. Accordingly, the content ratio is preferably 70% or less, more preferably 65% or less, and further preferably 60% or less.

$TiO_2$ is an optional component, and is a component increasing the refractive index of the glass, and enlarging the dispersion of the glass. When $TiO_2$ is contained in the optical glass of this invention, the crack resistance can be improved. On the other hand, when an amount of $TiO_2$ is too much, the glass is likely to be colored and transmittance is lowered. Accordingly, a content ratio of $TiO_2$ is preferably 7% or less. When the optical glass of this invention contains $TiO_2$, the content ratio is preferably 0.5% or more, more preferably 1% or more, and further preferably 1.5% or more. The content ratio of $TiO_2$ is preferably 6% or less, more preferably 5.5% or less, and further preferably 5% or less.

$ZrO_2$ is an optional component, and is a component increasing the refractive index of the glass and increasing the chemical durability of the glass. When $ZrO_2$ is contained in the optical glass of this invention, the crack resistance can be improved. On the other hand, when an amount of $ZrO_2$ is too much, the devitrification is likely to occur. Accordingly, a content ratio of $ZrO_2$ is preferably 20% or less. When the optical glass of this invention contains $ZrO_2$, the content ratio is preferably 1% or more, more preferably 2% or more, and further preferably 3% or more. The content ratio of $ZrO_2$ is preferably 15% or less, more preferably 10% or less, and further preferably 8% or less.

$Li_2O$ is a component improving the strength of the glass, securing the low Tg, and improving glass melting. A content ratio of $Li_2O$ is 1% or more and 20% or less. When the content ratio of $Li_2O$ is 1% or more, the strength (Kc) and the crack resistance (CIL) can be improved. On the other hand, when an amount of $Li_2O$ is too much, the devitrification is likely to occur. The content ratio of $Li_2O$ is preferably 2% or more, more preferably 3% or more, and further preferably 4% or more. The content ratio of $Li_2O$ is preferably 19% or less, more preferably 15% or less, further preferably 13% or less, particularly preferably 10% or less, and the most preferably 8% or less.

$Na_2O$ is a component suppressing the devitrification and lowering the Tg. A content ratio of $Na_2O$ is 1% or more and 18% or less. When the content ratio of $Na_2O$ is 1% or more, an excellent devitrification suppression effect can be obtained. On the other hand, when an amount of $Na_2O$ is too much, the strength and the crack resistance are likely to be lowered. The content ratio of $Na_2O$ is preferably 1.5% or more, more preferably 2% or more, and further preferably 2.5% or more. The content ratio of $Na_2O$ is preferably 15% or less, more preferably 12% or less, further preferably 10% or less, particularly preferably 7% or less, and the most preferably 5% or less.

$K_2O$ is a component improving the glass melting and suppressing the devitrification. A content ratio of $K_2O$ is 0.1% or more and 10% or less. When the content ratio of $K_2O$ is 0.1% or more, the devitrification suppression effect is improved. On the other hand, when an amount of $K_2O$ is too much, the strength and the crack resistance are likely to be lowered. The content ratio of $K_2O$ is preferably 0.3% or more, more preferably 0.5% or more, and further preferably 1% or more. The content ratio of $K_2O$ is preferably 7% or less, more preferably 5% or less, and further preferably 3% or less.

In the optical glass of this embodiment, among alkali metal components ($Li_2O$, $Na_2O$, $K_2O$), $Li_2O$ is the component improving the strength of the glass as stated above, but the devitrification is likely to occur when the amount of $Li_2O$ is too much. Accordingly, in the optical glass of this embodiment, the devitrification due to increase in $Li_2O$ is suppressed by containing $K_2O$ having the high devitrification suppression effect, to thereby enable to secure the high strength when the content ratio of $Li_2O$ is made large. Accordingly, in the optical glass of this embodiment, a value in mass% based on oxides of $Li_2O / (Li_2O + Na_2O + K_2O)$ is 0.4 or more. When $Li_2O / (Li_2O + Na_2O + K_2O)$ is less than 0.4, the strength and the crack resistance decrease, a specific gravity becomes large, and mechanical properties are likely to decrease. On the other hand, when $Li_2O / (Li_2O + Na_2O + K_2O)$ is too large, viscosity is likely to be lowered, and press moldability decreases. $Li_2O / (Li_2O + Na_2O + K_2O)$ is preferably 0.45 or more, more preferably 0.5 or more, and further preferably 0.55 or more.

ZnO is an optional component, and is a component improving the mechanical properties such as the strength and the crack resistance of the glass. On the other hand, when an amount of ZnO is too much, the devitrification is likely to occur. Accordingly, a content ratio of ZnO is 15% or less. The content ratio of ZnO is preferably 13% or less, more preferably 10% or less, further preferably 8% or less, and particularly preferably 6% or less. The content ratio of ZnO may be further smaller, and in this case, the content ratio is preferably 5% or less, more preferably 4% or less, further preferably 3% or less, and particularly preferably 1% or less. ZnO is the most preferably substantially not contained.

$P_2O_5$ is an optional component. $P_2O_5$ is a component lowering the Tg, and adjusting an Abbe number. However, when an amount of $P_2O_5$ is too much, the crack resistance is likely to be lowered. Accordingly, a content ratio of $P_2O_5$ is 5% or less. The content ratio of $P_2O_5$ is preferably 4% or less, more preferably 3% or less, further preferably 2% or less, and particularly preferably 1% or less. $P_2O_5$ is the most preferably substantially not contained.

$B_2O_3$ is an optional component. $B_2O_3$ is a component lowering the Tg, and improving the mechanical properties such as the strength and the crack resistance of the glass. However, when an amount of $B_2O_3$ is too much, the refractive index is likely to be lowered. Accordingly, a content ratio of $B_2O_3$ is 6% or less. The content ratio of $B_2O_3$ is preferably 5% or less, more preferably 4% or less, further preferably 3% or less, and particularly preferably 1% or less. $B_2O_3$ is the most preferably substantially not contained.

$La_2O_3$ is an optional component. $La_2O_3$ is a component increasing the refractive index of the glass. However, when an amount of $La_2O_3$ is too much, the mechanical properties are lowered. Accordingly, a content ratio of $La_2O_3$ is preferably 15% or less, more preferably 10% or less, and further preferably 5% or less when it is contained. The content ratio of $La_2O_3$ may be further smaller, and in this case, the content ratio is preferably 3% or less, more preferably 2% or less, and further preferably 1% or less. La$_2$O$_3$ is the most preferably substantially not contained.

BaO is an optional component. BaO is a component suppressing the devitrification, but when an amount of BaO is too much, the crack resistance is likely to be lowered. Accordingly, a content ratio of BaO is preferably 4% or less when it is contained. The content ratio of BaO is more preferably 2% or less, and further preferably 1% or less. BaO is the most preferably substantially not contained.

CaO is an optional component. CaO is a component suppressing the devitrification, but when an amount of CaO is too much, the crack resistance is likely to be lowered. Accordingly, a content ratio of CaO is preferably 5% or less, more preferably 3% or less, further preferably 2% or less, and particularly preferably 1% or less when it is contained. CaO is the most preferably substantially not contained.

Y$_2$O$_3$ is an optional component. Y$_2$O$_3$ is a component increasing the refractive index of the glass, and improving the strength and the crack resistance. On the other hand, when an amount of Y$_2$O$_3$ is too much, the dispersion of the glass is lowered, and the devitrification is likely to occur. Accordingly, a content ratio of Y$_2$O$_3$ is preferably 10% or less when it is contained. The content ratio of Y$_2$O$_3$ is more preferably 5% or less, further preferably 3% or less, and particularly preferably 1% or less.

Gd$_2$O$_3$ is an optional component. Gd$_2$O$_3$ is a component increasing the refractive index of the glass, and improving the strength and the crack resistance. On the other hand, when an amount of Gd$_2$O$_3$ is too much, the devitrification is likely to occur. Accordingly, a content ratio of Gd$_2$O$_3$ is preferably 10% or less, more preferably 5% or less, further preferably 3% or less, still further preferably 1% or less, and particularly preferably substantially not contained.

Ln$_2$O$_3$ (where Ln is one or more selected from a group made up of Y, La, Gd, Yb and Lu) improves the refractive index of the glass. On the other hand, when an amount of Ln$_2$O$_3$ is too much, the dispersion of the glass is lowered, and the devitrification is likely to occur. Accordingly, a content ratio of Ln$_2$O$_3$ is preferably 15% or less in total, more preferably 10% or less, and further preferably 7% or less. The content ratio of Ln$_2$O$_3$ may be further smaller, and in this case, the content ratio is preferably 5% or less, more preferably 3% or less, further preferably 2% or less, particularly preferably 1% or less, and the most preferably substantially not contained.

Al$_2$O$_3$ is an optional component. Al$_2$O$_3$ is a component improving chemical durability. However, when an amount of Al$_2$O$_3$ is too much, the glass is likely to be devitrified. Accordingly, a content ratio of Al$_2$O$_3$ is preferably 7% or less, more preferably 5% or less, further preferably 3% or less, still further preferably 1% or less, and particularly preferably substantially not contained.

WO$_3$ is an optional component. When a small amount of WO$_3$ is contained, the devitrification of the glass is suppressed, but when the amount of WO$_3$ is too much, the glass is conversely likely to be devitrified. Accordingly, a content ratio of WO$_3$ is preferably 10% or less, more preferably 7% or less, further preferably 5% or less, still further preferably 3% or less, yet further more preferably 1% or less, and particularly preferably substantially not contained.

Bi$_2$O$_3$ is an optional component. Bi$_2$O$_3$ is a component increasing the refractive index of the glass, lowering the Tg, and reducing the devitrification of the glass. On the other hand, when an amount of Bi$_2$O$_3$ is too much, the glass is likely to be colored. Accordingly, Bi$_2$O$_3$ is preferably substantially not contained.

MgO is an optional component. MgO is a component improving the glass melting, suppressing the devitrification, and adjusting optical constants such as the Abbe number and the refractive index of the glass. On the other hand, when an amount of MgO is too much, the devitrification is conversely accelerated. Accordingly, a content ratio of MgO is preferably 5% or less, more preferably 3% or less, further preferably 1% or less, and particularly preferably substantially not contained.

SrO is an optional component. SrO is a component improving the glass melting, suppressing the devitrification, and adjusting the optical constants of the glass. On the other hand, when an amount of SrO is too much, the devitrification is conversely accelerated. Accordingly, a content ratio of SrO is preferably 5% or less, more preferably 3% or less, further preferably 1% or less, and particularly preferably substantially not contained.

Since As$_2$O$_3$ is a noxious chemical substance, there is a tendency to refrain from using As$_2$O$_3$ in recent years, and environmental measures are required to be taken. Accordingly, As$_2$O$_3$ is preferably substantially not contained except for inevitable mixing when environmental effects are emphasized.

In the optical glass of this embodiment, it is preferable that at least one of Sb$_2$O$_3$ and SnO$_2$ is further contained. They are not essential components, but can be added for the purposes of adjustment of refractive-index properties, improvement in glass melting, suppression of coloring, improvement in transmittance, clarifying, improvement in chemical durability, and so on. When these components are contained, a content ratio is preferably 1% or less in total, and more preferably 0.5% or less.

It is preferable that F is further contained in the optical glass of this embodiment. F is not essential, but can be added for the purposes of improvement in glass melting, improvement in transmittance, improvement in clarifying, and so on. When F is contained, a content ratio is preferably 5% or less, and more preferably 3% or less.

In the optical glass of this embodiment, the Tg can be lowered by increasing an amount of Li$_2$O + Na$_2$O + K$_2$O. However, when the amount of Li$_2$O + Na$_2$O + K$_2$O is too much, the viscosity is likely to be lowered, the press moldability is lowered, or the glass is likely to be devitrified. On the other hand, when the amount of Li$_2$O + Na$_2$O + K$_2$O is too small,

the viscosity is likely to be lowered, and the press moldability is lowered. Accordingly, a content ratio of $Li_2O + Na_2O + K_2O$ is 5% or more and 30% or less. The content ratio of $Li_2O + Na_2O + K_2O$ is preferably 6% or more, more preferably 7% or more, and further preferably 8% or more. The content ratio of $Li_2O + Na_2O + K_2O$ is preferably 25% or less, more preferably 20% or less, further preferably 18% or less, and particularly preferably 17% or less. The content ratio of $Li_2O + Na_2O + K_2O$ may be further smaller, and in this case, the content ratio is preferably 16% or less, more preferably 14% or less, and particularly preferably 12% or less.

In the optical glass of this embodiment, when the total amount of the alkali metal components ($Li_2O + Na_2O + K_2O$) is large, the Tg is lowered but the refractive index is likely to be lowered. The refractive index can be further increased while keeping the Tg low by making $Nb_2O_5$, which contributes to improvement in the strength contain for a predetermined amount or more with respect to a total amount of $La_2O_3$ and BaO from among $Nb_2O_5$, $La_2O_3$, and BaO being components increasing the refractive index,. Accordingly, $Nb_2O_5 - (La_2O_3 + BaO)$ is preferably 10% or more. On the other hand, when $Nb_2O_5 - (La_2O_3 + BaO)$ is too much, the specific gravity becomes large, and therefore, it is preferably 75% or less. $Nb_2O5 - (La_2O_3 + BaO)$ is preferably 15% or more, more preferably 20% or more, further preferably 30% or more, and particularly preferably 40% or more from points of reducing the specific gravity and obtaining the high refractive index. $Nb_2O_5 - (La_2O_3 + BaO)$ may be further larger, and in this case, it is preferably 45% or more, and more preferably 50% or more.

In the optical glass of this embodiment, a value in mass% based on oxides of $(Nb_2O_5 - (La_2O_3 + BaO)) \times Li_2O / (Li_2O + Na_2O + K_2O)$ is preferably 5 or more. As stated above, $(Nb_2O_5 - (La_2O_3 + BaO))$ is an index to obtain the high refractive-index and the high strength, and $(Li_2O + Na_2O + K_2O)$ is an index to lower the Tg. When $(Nb_2O_5 - (La_2O_3 + BaO)) \times Li_2O / (Li_2O + Na_2O + K_2O)$ is 5 or more, the optical glass having high refractive index and high strength, and the lower Tg can be obtained. $(Nb_2O_5 - (La_2O_3 + BaO)) \times Li_2O / (Li_2O + Na_2O + K_2O)$ is preferably 10 or more, more preferably 15 or more, further preferably 20 or more, particularly preferably 25 or more, and the most preferably 30 or more.

In the optical glass of this embodiment, a value in mass% based on oxides of $(Nb_2O_5 + Ln_2O_3 + Ti_2O + ZrO_2 + WO_3 + ZnO) \times Li_2O$ is preferably 500 or less. When $(Nb_2O_5 + Ln_2O_3 + Ti_2O + ZrO_2 + WO_3 + ZnO) \times Li_2O$ is over 500, the glass is likely to be devitrified. It is more preferably 450 or less, and further preferably 400 or less.

In the optical glass of this embodiment, the contents of the alkali metal components preferably satisfy a relationship of $Li_2O > Na_2O > K_2O$ from a viewpoint of increasing the strength of the optical glass. Similarly, $Li_2O / Na_2O$ is preferably 1.2 or more in mass ratio from a viewpoint of increasing the strength of the optical glass.

[Manufacturing method of optical glass and glass molded product]

The optical glass of this invention is fabricated as described below, for example. That is, raw materials are weighted to be the above-described predetermined glass composition, and they are uniformly mixed. The fabricated mixture is put into a platinum crucible, a quartz crucible or an alumina crucible to be roughly melted. After that, the resultant is put into a gold crucible, the platinum crucible, a platinum alloy crucible, or an iridium crucible to be melted at a temperature range of 1200 to 1400°C for 2 to 10 hours, it is homogenized by stirring, finding and clarifying, and thereafter, it is casted into a metal mold annealed. After the annealing, chemical tempering is performed according to need to manufacture the optical glass.

In addition, a glass molded product can be fabricated by using means such as, for example, a reheat press molding and a precise press molding from the fabricated optical glass. That is, a lens preform for a mold-press molding is fabricated from the optical glass, this lens preform is subjected to polishing after the reheat press molding to thereby fabricate the glass molded product, or for example, the lens preform fabricated by polishing is subjected to the precise press molding to fabricate the glass molded product. Means to fabricate the glass molded product are not limited to these means.

The glass molded products fabricated as above are useful for various optical elements, and particularly, they are suitably used for purposes exposed to harsh environment such as an imaging lens used for a vehicle-mounted camera.

According to the optical glass of this embodiment described hereinabove, it is possible to obtain the optical glass having high refractive index, high strength, excellent crack resistance, and good moldability which is suitably used for an imaging lens, or the like used for a vehicle-mounted camera exposed to harsh environment.

EXAMPLES

Raw materials were weighted to have chemical compositions (mass% in terms of oxides) listed in Tables 1 to 4. High purity materials used for a normal optical glass such as oxide, hydroxide, carbonate, nitrate, fluoride, hydroxide, and a metaphosphoric acid compound each corresponding to raw materials of each component were selected and used as the raw materials.

The weighted raw materials were uniformly mixed, put into a platinum crucible with an internal volume of 300 mL, melted at approximately 1400°C for about two hours, clarified, stirred, and thereafter, retained at 1400°C for 0.5 hours, then casted into a rectangular mold with 50 mm in length × 100 mm in width which was preheated to approximately 650°C, and it was slowly cooled at about 0.5°C/min to obtain samples.

[Evaluation]

There were measured a glass transition point (Tg), a refractive index (nd), a specific gravity, Young's modulus (E), a fracture toughness value (Kc), a crack initiation load (CIL), a devitrification temperature, water resistance (RW), acid resistance (RA), and transmittance at the wavelength of 360 nm ($T_{360}$) as described below regarding the obtained respective samples.

Tg: A sample processed into a column shape with a diameter of 5 mm and a length of 20 mm was measured through a thermal expansion method by using a thermomechanical analyzer (manufactured by Bruker AXS Corporation, product name: TMA4000SA) at a rate of heating of 5°C/min.

nd: A sample glass was processed into a triangle-shaped prism with a size of 30 mm on each side, and a thickness of 10 mm, to be measured by a refractometer (manufactured by Kalnew Corporation, device name: KPR-2000).

Specific gravity: A ratio between a mass of a sample and a mass of pure water at 4°C with the same volume as the sample under a pressure of 101.325 kPa (standard pressure) was displayed as SG, and measured based on JIS Z8807 (1976, a measuring method by weighting in liquid).

E: A block-shaped sample with a size of 20 mm × 20 mm × 10 mm was measured by using an ultrasonic precision thickness gauge (manufactured by OLYMPUS Corporation, MODEL 38DL PLUS) (unit: GPa).

Kc: Regarding a sample glass plate with a thickness of 4 to 10 mm, and a size of about 4 cm × 4 cm, the Kc was found through the IF method based on JIS R1607 as described below. That is, a Vickers hardness meter is used, an indentation is introduced with an indentation load of 5 kgf, a retention time of 15 seconds by a Vickers indenter, then the Vickers indenter is removed, a diagonal line length and a crack length of the indentation were measured after waiting for 15 seconds by using a microscope attached to a tester, and this measurement was repeated for 10 times, to be calculated by the aforementioned expression (1).

CIL: The Vickers indenter was pressed into a surface of a plate-shaped sample glass with a thickness of 1 mm whose both surfaces were mirror-polished by using a Vickers hardness tester for 15 seconds, then the Vickers indenter was removed, and around the indentation was observed after 15 seconds had passed. The Vickers indenter was pressed in with each of indentation loads of the Vickers indenter of 100 gf, 200 gf, 300 gf, 500 gf, 1000 gf, 2000 gf, and an average value of the number of occurred cracks was calculated by each indentation load of the Vickers indenter. A regression calculation was performed by using a sigmoid function regarding a relationship between the load and the number of cracks, and the load when the number of cracks becomes two was set as the CIL value (gf) of the glass from the regression calculation result.

Devitrification temperature: About 5 g of a sample was put into a platinum dish, retained at temperatures every 10°C from 1000°C to 1400°C each for one hour and the resultant was naturally cooled, then presence/absence of crystal precipitation was observed by a microscope, and a maximum temperature where a crystal with a size of 1 $\mu$m or more in a long edge or a major axis was not recognized was set as the devitrification temperature.

RW: Measurement was performed based on JOGIS06-2008: the measuring method for chemical durability of optical glass (powder method). Concretely, a mass decrease rate (%) was measured when glass powder with a diameter of 420 to 600 $\mu$m was immersed in 80 mL of pure water at 100°C for one hour. In case when the mass decrease rate was less than 0.05 (%), the class was set to 1, in case of 0.05 or more and less than 0.10 (%), the class was set to 2, in case of 0.10 or more and less than 0.25 (%), the class was set to 3, in case of 0.25 or more and less than 0.60 (%), the class was set to 4, in case of 0.60 or more and less than 1.10 (%), the class was set to 5, and in case of 1.10 (%) or more, the class was set to 6.

RA: Measurement was performed based on JOGIS06-2008: the measuring method for chemical durability of optical glass (powder method). Concretely, a mass decrease rate (%) was measured when glass powder with a diameter of 420 to 600 $\mu$m was immersed in 80 mL of 0.01 normal aqueous solution of nitric acid at 100°C for one hour. In case when the mass decrease rate was less than 0.20 (%), a class was set to 1, in case of 0.20 or more and less than 0.35 (%), the class was set to 2, in case of 0.35 or more and less than 0.65 (%), the class was set to 3, in case of 0.65 or more and less than 1.20 (%), the class was set to 4, in case of 1.20 or more and less than 2.20 (%), the class was set to 5, and in case of 2.20 (%) or more, the class was set to 6.

$T_{360}$: Transmittance of light with a wavelength of 360 nm was measured by a spectrophotometer (manufactured by Hitachi High-Technologies Corporation U-4100) regarding a sample processed into a plate shape with a size of 10 mm × 30 mm × 1 mm in thickness, whose both surfaces were mirror-polished.

Results and the compositions of the glasses are listed in Tables 1 to 6. Examples 1 to 21, 42 to 48 are examples, and Examples 22 to 41 are comparative examples.

Each notation of "-" in Table represents that the value is not measured. The value in parenthesis "()" in Table represents a calcurated value. All of the not-measured devitrification temperatures are 1300°C or less.

[Table 1-1]

| | Example 1 | Example 2 | Example 3 | Example 4 | Example 5 | Example 6 | Example 7 | Example 8 |
|---|---|---|---|---|---|---|---|---|
| $Nb_2O_5$ | 49.0 | 53.7 | 53.5 | 53.8 | 41.4 | 53.2 | 53.2 | 51.9 |
| $SiO_2$ | 29.5 | 30.4 | 30.2 | 31.7 | 39.8 | 30.0 | 30.0 | 30.2 |
| $TiO_2$ | 6.3 | 5.4 | 5.4 | 3.6 | 6.2 | 5.3 | 5.3 | 0.0 |
| $ZrO_2$ | 2.2 | 0.0 | 0.0 | 0.0 | 0.0 | 0.0 | 0.0 | 7.6 |
| $Li_2O$ | 6.2 | 6.7 | 6.4 | 6.4 | 7.4 | 5.7 | 6.3 | 6.1 |
| $Na_2O$ | 2.7 | 2.8 | 3.5 | 3.5 | 4.0 | 4.7 | 2.1 | 3.2 |
| $K_2O$ | 4.1 | 1.1 | 1.1 | 1.1 | 1.2 | 1.0 | 3.0 | 1.0 |
| $ZnO$ | 0.0 | 0.0 | 0.0 | 0.0 | 0.0 | 0.0 | 0.0 | 0.0 |
| $P_2O_5$ | 0.0 | 0.0 | 0.0 | 0.0 | 0.0 | 0.0 | 0.0 | 0.0 |
| $B_2O_3$ | 0.0 | 0.0 | 0.0 | 0.0 | 0.0 | 0.0 | 0.0 | 0.0 |
| $La_2O_3$ | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 |
| $MgO$ | 0.0 | 0.0 | 0.0 | 0.0 | 0.0 | 0.0 | 0.0 | 0.0 |
| $CaO$ | 0.0 | 0.0 | 0.0 | 0.0 | 0.0 | 0.0 | 0.0 | 0.0 |
| $Al_2O_3$ | 0.0 | 0.0 | 0.0 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $WO_3$ | 0.0 | 0.0 | 0.0 | 0.0 | 0.0 | 0.0 | 0.0 | 0.0 |
| $Gd_2O_3$ | 0.0 | 0.0 | 0.0 | 0.0 | 0.0 | 0.0 | 0.0 | 0.0 |
| $Sb_2O_3$ | 0.0 | 0.0 | 0.0 | 0.0 | 0.0 | 0.0 | 0.0 | 0.0 |
| $SrO$ | 0.0 | 0.0 | 0.0 | 0.0 | 0.0 | 0.0 | 0.0 | 0.0 |
| $Li_2O/(Li_2O+Na_2O+K_2O)$ | 0.478 | 0.636 | 0.584 | 0.584 | 0.584 | 0.496 | 0.550 | 0.597 |
| $Li_2O+Na_2O+K_2O$ | 13.0 | 10.6 | 10.9 | 10.9 | 12.6 | 11.5 | 11.5 | 10.3 |
| $Nb_2O_5-(La_2O_3+BaO)$ | 49.03 | 53.72 | 53.52 | 53.76 | 41.40 | 53.17 | 53.16 | 51.88 |
| $(Nb_2O_5-(La_2O_3+BaO)) \times (Li/(Li+Na+K))$ | 23.46 | 34.16 | 31.27 | 31.41 | 24.18 | 26.36 | 29.24 | 30.95 |
| $(Ln_2O_3+TiO_2+WO_3+Nb_2O_5+ZrO_2+Bi_2O_3+ZnO) \times Li_2O$ | 357.52 | 396.49 | 373.96 | 365.85 | 350.86 | 332.43 | 368.97 | 365.06 |

[Table 1-2]

| | Example 1 | Example 2 | Example 3 | Example 4 | Example 5 | Example 6 | Example 7 | Example 8 |
|---|---|---|---|---|---|---|---|---|
| $n_d$ | 1.832 | (1.844) | 1.846 | 1.830 | 1.762 | 1.842 | 1.841 | 1.829 |
| Tg (°C) | 556 | (555) | 556 | 558 | 552 | 556 | 556 | 581 |
| Devitrification temperature (°C) | (1080) | (1070) | 1080 | (1070) | (1040) | (1060) | (1100) | 1240 |
| Specific gravity (g/cm³) | 3.37 | (3.40) | 3.39 | 3.37 | 3.15 | 3.39 | 3.38 | 3.45 |
| Kc (MPa·m$^{1/2}$) | (0.64) | 0.61 | 0.62 | (0.61) | 0.66 | (0.61) | (0.61) | (0.63) |
| CIL (gf) | (35) | 29 | 35 | 37 | 36 | (33) | (33) | 46 |
| $T_{360}$ (%) | - | - | 40 | - | 60 | 60 | 50 | 70 |
| E (GPa) | 104 | (106) | 106 | 104 | 102 | 103 | 104 | 107 |
| RA (class) | - | - | 1 | - | - | - | - | 1 |
| RW (class) | - | - | 1 | - | - | - | - | 1 |

[Table 2-1]

| | Example 9 | Example 10 | Example 11 | Example 12 | Example 13 | Example 14 | Example 15 | Example 16 |
|---|---|---|---|---|---|---|---|---|
| $Nb_2O_5$ | 52.2 ' | 51.6 | 48.8 | 54.7 | 51.9 | 48.4 | 50.6 | 51.7 |
| $SiO_2$ | 29.2 | 31.3 | 31.8 | 28.8 | 29.0 | 31.6 | 27.7 | 28.3 |
| $TiO_2$ | 0.0 | 0.0 | 0.0 | 0.0 | 0.0 | 0.0 | 0.0 | 0.0 |
| $ZrO_2$ | 7.6 | 7.5 | 8.0 | 7.2 | 7.6 | 7.9 | 7.4 | 7.6 |
| $Li_2O$ | 6.8 | 5.5 | 7.1 | 5.3 | 6.1 | 6.4 | 6.0 | 6.1 |
| $Na_2O$ | 3.2 | 3.2 | 3.3 | 3.0 | 4.5 | 4.7 | 3.1 | 3.2 |
| $K_2O$ | 1.0 | 1.0 | 1.0 | 0.9 | 1.0 | 1.0 | 0.9 | 1.0 |
| $ZnO$ | 0.0 | 0.0 | 0.0 | 0.0 | 0.0 | 0.0 | 0.0 | 0.0 |
| $P_2O_5$ | 0.0 | 0.0 | 0.0 | 0.0 | 0.0 | 0.0 | 4.3 | 0.0 |
| $B_2O_3$ | 0.0 | 0.0 | 0.0 | 0.0 | 0.0 | 0.0 | 0.0 | 2.1 |
| $La_2O_3$ | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 |
| $MgO$ | 0.0 | 0.0 | 0.0 | 0.0 | 0.0 | 0.0 | 0.0 | 0.0 |
| $CaO$ | 0.0 | 0.0 | 0.0 | 0.0 | 0.0 | 0.0 | 0.0 | 0.0 |
| $Al_2O_3$ | 0.0 | 0.0 | 0.0 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $WO_3$ | 0.0 | 0.0 | 0.0 | 0.0 | 0.0 | 0.0 | 0.0 | 0.0 |
| $Gd_2O_3$ | 0.0 | 0.0 | 0.0 | 0.0 | 0.0 | 0.0 | 0.0 | 0.0 |
| $Sb_2O_3$ | 0.0 | 0.0 | 0.0 | 0.0 | 0.0 | 0.0 | 0.0 | 0.0 |
| $SrO$ | 0.0 | 0.0 | 0.0 | 0.0 | 0.0 | 0.0 | 0.0 | 0.0 |
| $Li_2O/(Li_2O+Na_2O+K_2O)$ | 0.619 | 0.571 | 0.619 | 0.571 | 0.531 | 0.531 | 0.597 | 0.597 |
| $Li_2O+Na_2O+K_2O$ | 11.0 | 9.6 | 11.5 | 9.2 | 11.6 | 12.1 | 10.0 | 10.3 |
| $Nb_2O_5-(La_2O_3+BaO)$ | 52.20 | 51.56 | 48.78 | 54.69 | 51.86 | 48.44 | 50.60 | 51.72 |
| $(Nb_2O_5-(La_2O_3+BaO)) \times (Li/(Li+Na+K))$ | 32.33 | 29.44 | 30.21 | 31.23 | 27.53 | 25.72 | 30.19 | 30.86 |
| $(Ln_2O_3+TiO_2+WO_3+Nb_2O_5+ZrO_2+Bi_2O_3+ZnO) \times Li_2O$ | 406.59 | 324.51 | 402.79 | 326.32 | 364.77 | 361.15 | 347.31 | 362.92 |

EP 3 381 871 A1

12

[Table 2-2]

| | Example 9 | Example 10 | Example 11 | Example 12 | Example 13 | Example 14 | Example 15 | Example 16 |
|---|---|---|---|---|---|---|---|---|
| $n_d$ | 1.833 | 1.823 | 1.809 | 1.846 | 1.830 | 1.805 | 1.836 | 1.841 |
| Tg (°C) | 576 | 583 | 575 | 579 | 575 | 576 | 577 | 552 |
| Devitrification temperature (°C) | 1240 | 1190 | (1190) | 1250 | (1200) | (1190) | (1150) | (1200) |
| Specific gravity (g/cm$^3$) | 3.46 | 3.43 | 3.39 | 3.50 | 3.46 | 3.39 | 3.47 | 3.47 |
| Kc (MPa·m$^{1/2}$) | (0.66) | (0.60) | (0.68) | (0,60) | (0.66) | (0.68) | 0.63 | 0.65 |
| CIL (gf) | 46 | 32 | 55 | 36 | 51 | (57) | 33 | 40 |
| $T_{360}$ (%) | - | - | - | - | - | - | - | - |
| E (GPa) | 107 | 105 | 106 | 106 | 107 | 106 | 109 | 111 |
| RA (class) | - | - | - | - | - | - | - | - |
| RW (class) | - | - | - | - | - | - | - | - |

[Table 3-1]

| | Example 17 | Example 18 | Example 19 | Example 20 | Example 21 | Example 22 | Example 23 | Example 24 |
|---|---|---|---|---|---|---|---|---|
| $Nb_2O_5$ | 52.2 | 51.2 | 51.6 | 51.5 | 51.9 | 0.0 | 0.0 | 0.0 |
| $SiO_2$ | 28.6 | 28.0 | 28.2 | 28.2 | 30.2 | 9.5 | 10.7 | 10.1 |
| $TiO_2$ | 0.0 | 0.0 | 2.4 | 0.0 | 0.0 | 0.0 | 0.0 | 0.0 |
| $ZrO_2$ | 7.6 | 7.5 | 7.5 | 7.5 | 7.6 | 1.7 | 1.9 | 1.8 |
| $Li_2O$ | 6.2 | 6.1 | 6.1 | 6.1 | 6.1 | 0.9 | 2.2 | 1.5 |
| $Na_2O$ | 3.2 | 3.1 | 3.2 | 3.2 | 3.2 | 0.0 | 0.0 | 0.0 |
| $K_2O$ | 1.0 | 1.0 | 1.0 | 1.0 | 1.0 | 0.0 | 0.0 | 0.0 |
| $ZnO$ | 0.0 | 0.0 | 0.0 | 2.5 | 0.0 | 24.6 | 27.8 | 26.1 |
| $P_2O_5$ | 0.0 | 0.0 | 0.0 | 2.5 | 0.0 | 0.0 | 0.0 | 0.0 |
| $B_2O_3$ | 0.0 | 0.0 | 0.0 | 0.0 | 0.0 | 20.6 | 22.3 | 21.9 |
| $La_2O_3$ | 0.0 | 0.0 | 0.0 | 0.0 | 0.0 | 20.2 | 22.8 | 21.4 |
| $BaO$ | 0.0 | 0.0 | 0.0 | 0.0 | 0.0 | 0.0 | 0.0 | 0.0 |
| $MgO$ | 0.0 | 0.0 | 0.0 | 0.0 | 0.0 | 0.0 | 0.0 | 0.0 |
| $CaO$ | 0.0 | 0.0 | 0.0 | 0.0 | 0.0 | 0.0 | 0.0 | 0.0 |
| $Al_2O_3$ | 0.0 | 3.1 | 0.0 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $WO_3$ | 0.0 | 0.0 | 0.0 | 0.0 | 0.0 | 0.0 | 0.0 | 0.0 |
| $Gd_2O_3$ | 0.0 | 0.0 | 0.0 | 0.0 | 0.0 | 22.4 | 11.3 | 17.2 |
| $Sb_2O_3$ | 0.0 | 0.0 | 0.0 | 0.0 | 0.0 | 0.0 | 0.0 | 0.0 |
| $SrO$ | 0.0 | 0.0 | 0.0 | 0.0 | 0.0 | 0.0 | 0.0 | 0.0 |
| $Li_2O/(Li_2O+Na_2O+K_2O)$ | 0.597 | 0.597 | 0.597 | 0.597 | 0.597 | 1.000 | 1.000 | 1.000 |
| $Li_2O+Na_2O+K_2O$ | 10.4 | 10.2 | 10.2 | 10.2 | 10.3 | 0.9 | 2.2 | 1.5 |
| $Nb_2O_5-(La_2O_3+BaO)$ | 52.19 | 51.21 | 51.56 | 51.54 | 51.88 | -20.18 | -22.79 | -21.40 |
| $(Nb_2O_5-(La_2O_3+BaO)) \times (Li/(Li+Na+K))$ | 31.14 | 30.55 | 30.76 | 30.75 | 30.95 | -20.18 | -22.79 | -21.40 |
| $(Ln_2O_3+TiO_2+WO_3+Nb_2O_5+ ZrO_2+Bi_2O_3+ZnO) \times Li_2O$ | 369.55 | 355.82 | 375.57 | 375.60 | 362.77 | 63.81 | 140.72 | 101.58 |

[Table 3-2]

| | Example 17 | Example 18 | Example 19 | Example 20 | Example 21 | Example 22 | Example 23 | Example 24 |
|---|---|---|---|---|---|---|---|---|
| $n_d$ | 1.838 | 1.824 | 1.863 | 1.844 | 1.826 | 1.743 | 1.719 | 1.732 |
| $T_g$ (°C) | 570 | 568 | 573 | 562 | 553 | 562 | 529 | 547 |
| Devitrification temperature (°C) | (1230) | (1260) | (1250) | (1260) | (1240) | (1140) | (1080) | (1120) |
| Specific gravity (g/cm$^3$) | 3.49 | 3.43 | 3.52 | 3.53 | 3.45 | 4.44 | 4.09 | 4.28 |
| Kc (MPa·m$^{1/2}$) | 0.62 | 0.71 | 0.63 | 0.62 | 0.62 | 0.72 | 0.72 | 0.73 |
| CIL (gf) | 37 | 65 | 36 | 40 | 46 | 35 | 33 | 24 |
| $T_{360}$ (%) | - | - | - | - | - | - | - | - |
| E (GPa) | 112 | 107 | 112 | 112 | 110 | (132) | (143) | (138) |
| RA (class) | - | - | - | - | - | - | - | - |
| RW (class) | - | - | - | - | - | - | - | - |

[Table 4-1]

| | Example 25 | Example 26 | Example 27 | Example 28 | Example 29 | Example 30 | Example 31 | Example 32 |
|---|---|---|---|---|---|---|---|---|
| $Nb_2O_5$ | 0.0 | 0.0 | 0.0 | 0.0 | 0.0 | 0.0 | 0.0 | 51.7 |
| $SiO_2$ | 10.4 | 10.0 | 5.4 | 5.4 | 5.3 | 5.3 | 5.3 | 29.2 |
| $TiO_2$ | 0.0 | 0.0 | 0.0 | 0.0 | 0.0 | 0.0 | 0.0 | 5.2 |
| $ZrO_2$ | 1.9 | 1.8 | 3.5 | 3.5 | 3.5 | 3.5 | 3.4 | 0.0 |
| $Li_2O$ | 1.0 | 1.0 | 0.0 | 0.0 | 0.0 | 0.0 | 0.0 | 2.9 |
| $Na_2O$ | 0.0 | 0.0 | 3.7 | 3.6 | 3.6 | 3.6 | 3.6 | 10.0 |
| $K_2O$ | 0.0 | 0.0 | 0.0 | 0.0 | 0.0 | 0.0 | 0.0 | 1.0 |
| $ZnO$ | 27.1 | 25.8 | 15.3 | 15.1 | 15.0 | 14.9 | 14.8 | 0.0 |
| $P_2O_5$ | 0.0 | 0.0 | 0.0 | 0.0 | 0.0 | 0.0 | 0.0 | 0.0 |
| $B_2O_3$ | 22.6 | 21.6 | 13.9 | 13.8 | 13.7 | 13.6 | 13.5 | 0.0 |
| $La_2O_3$ | 22.2 | 21.1 | 31.4 | 22.2 | 13.2 | 8.8 | 4.4 | 0.0 |
| $BaO$ | 0.0 | 0.0 | 0.0 | 0.0 | 0.0 | 0.0 | 0.0 | 0.0 |
| $MgO$ | 0.0 | 0.0 | 0.0 | 0.0 | 0.0 | 0.0 | 0.0 | 0.0 |
| $CaO$ | 0.0 | 0.0 | 0.0 | 0.0 | 0.0 | 0.0 | 0.0 | 0.0 |
| $Al_2O_3$ | 3.9 | 1.8 | 4.5 | 4.4 | 4.4 | 4.4 | 4.3 | 0.0 |
| $Y_2O_3$ | 0.0 | 0.0 | 0.0 | 0.0 | 0.0 | 0.0 | 0.0 | 0.0 |
| $WO_3$ | 0.0 | 0.0 | 7.3 | 7.2 | 7.1 | 7.1 | 7.0 | 0.0 |
| $Gd_2O_3$ | 11.0 | 17.0 | 15.0 | 24.7 | 34.3 | 39.0 | 43.6 | 0.0 |
| $Sb_2O_3$ | 0.0 | 0.0 | 0.0 | 0.0 | 0.0 | 0.0 | 0.0 | 0.0 |
| $SrO$ | 0.0 | 0.0 | 0.0 | 0.0 | 0.0 | 0.0 | 0.0 | 0.0 |
| $Li_2O/(Li_2O+Na_2O+K_2O)$ | 1.000 | 1.000 | 0.000 | 0.000 | 0.000 | 0.000 | 0.000 | 0.208 |
| $Li_2O+Na_2O+K_2O$ | 1.0 | 1.0 | 3.7 | 3.6 | 3.6 | 3.6 | 3.6 | 14.0 |
| $Nb_2O_5-(La_2O_3+BaO)$ | -22.17 | -21.13 | -31.41 | -22.21 | -13.20 | -8.75 | -4.36 | 51.67 |
| $(Nb_2O_5-(La_2O_3+BaO)) \times (Li/(Li+Na+K))$ | -22.17 | -21.13 | 0.00 | 0.00 | 0.00 | 0.00 | 0.00 | 10.75 |
| $(Ln_2O_3+TiO_2+WO_3+Nb_2O_5+ ZrO_2+Bi_2O_3+ZnO) \times Li_2O$ | 63.07 | 63.62 | 0.00 | 0.00 | 0.00 | 0.00 | 0.00 | 165.07 |

[Table 4-2]

| | Example 25 | Example 26 | Example 27 | Example 28 | Example 29 | Example 30 | Example 31 | Example 32 |
|---|---|---|---|---|---|---|---|---|
| $n_d$ | 1.711 | 1.728 | 1.775 | 1.782 | 1.772 | 1.789 | 1.771 | 1.829 |
| Tg(°C) | 561 | 561 | 577 | 587 | 587 | 606 | 592 | 575 |
| Devitrification temperature (°C) | (1040) | (1100) | 1260 | 1260 | 1260 | 1270 | 1260 | (1080) |
| Specific gravity (g/cm$^3$) | 4.04 | 4.25 | 4.65 | 4.79 | 4.81 | 5.02 | 4.91 | 3.40 |
| Kc (MPa·m$^{1/2}$) | 0.76 | 0.76 | 0.72 | 0.73 | 0.74 | 0.73 | 0.76 | 0.60 |
| CIL (gf) | 46 | 31 | 32 | 36 | 37 | 32 | 39 | 19 |
| $T_{360}$ (%) | - | - | - | - | - | - | - | - |
| E (GPa) | (143) | (138) | (120) | (113) | (106) | (103) | (99) | 101 |
| RA (class) | - | - | - | - | - | - | - | - |
| RW (class) | - | - | - | - | - | - | - | - |

EP 3 381 871 A1

[Table 5-1]

| | Example 33 | Example 34 | Example 35 | Example 36 | Example 37 | Example 38 | Example 39 | Example 40 |
|---|---|---|---|---|---|---|---|---|
| $Nb_2O_5$ | 52.2 | 51.7 | 51.1 | 51.3 | 50.8 | 49.9 | 24.6 | 55.0 |
| $SiO_2$ | 29.5 | 29.2 | 28.9 | 29.0 | 28.7 | 28.2 | 52.9 | 20.0 |
| $TiO_2$ | 5.2 | 5.2 | 5.1 | 5.1 | 5.1 | 5.0 | 7.4 | 0.0 |
| $ZrO_2$ | 0.0 | 0.0 | 0.0 | 0.0 | 0.0 | 0.0 | 0.0 | 3.0 |
| $Li_2O$ | 4.9 | 3.9 | 2.9 | 4.8 | 3.8 | 2.2 | 8.8 | 10.0 |
| $Na_2O$ | 4.1 | 6.0 | 7.9 | 0.7 | 2.6 | 5.8 | 4.8 | 5.0 |
| $K_2O$ | 4.1 | 4.1 | 4.0 | 9.1 | 9.0 | 8.8 | 1.5 | 0.0 |
| $ZnO$ | 0.0 | 0.0 | 0.0 | 0.0 | 0.0 | 0.0 | 0.0 | 0.0 |
| $P_2O_5$ | 0.0 | 0.0 | 0.0 | 0.0 | 0.0 | 0.0 | 0.0 | 0.0 |
| $B_2O_3$ | 0.0 | 0.0 | 0.0 | 0.0 | 0.0 | 0.0 | 0.0 | 6.8 |
| $La_2O_3$ | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 |
| $MgO$ | 0.0 | 0.0 | 0.0 | 0.0 | 0.0 | 0.0 | 0.0 | 0.0 |
| $CaO$ | 0.0 | 0.0 | 0.0 | 0.0 | 0.0 | 0.0 | 0.0 | 0.0 |
| $Al_2O_3$ | 0.0 | 0.0 | 0.0 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $WO_3$ | 0.0 | 0.0 | 0.0 | 0.0 | 0.0 | 0.0 | 0.0 | 0.0 |
| $Gd_2O_3$ | 0.0 | 0.0 | 0.0 | 0.0 | 0.0 | 0.0 | 0.0 | 0.0 |
| $Sb_2O_3$ | 0.0 | 0.0 | 0.0 | 0.0 | 0.0 | 0.0 | 0.0 | 0.2 |
| $SrO$ | 0.0 | 0.0 | 0.0 | 0.0 | 0.0 | 0.0 | 0.0 | 0.0 |
| $Li_2O/(Li_2O+Na_2O+K_2O)$ | 0.374 | 0.277 | 0.194 | 0.330 | 0.247 | 0.130 | 0.584 | 0.584 |
| $Li_2O+Na_2O+K_2O$ | 13.1 | 14.0 | 14.8 | 14.6 | 15.4 | 16.9 | 15.0 | 15.0 |
| $Nb_2O_5-(La_2O_3+BaO)$ | 52.21 | 51.67 | 51.13 | 51.31 | 50.78 | 49.93 | 24.65 | 24.65 |
| $(Nb_2O_5-(La_2O_3+BaO)) \times (Li/(Li+Na+K))$ | 19.55 | 14.33 | 9.90 | 16.93 | 12.52 | 6.47 | 14.40 | 14.40 |
| $(Ln_2O_3+TiO_2+WO_3+Nb_2O_5+ ZrO_2+Bi_7O_3+ZnO) \times Li_2O$ | 280.91 | 220.08 | 161.68 | 271.29 | 212.62 | 119.91 | 281.23 | 580.00 |

[Table 5-2]

| | Example 33 | Example 34 | Example 35 | Example 36 | Example 37 | Example 38 | Example 39 | Example 40 |
|---|---|---|---|---|---|---|---|---|
| $n_d$ | 1.836 | 1.828 | 1.821 | 1.820 | 1.815 | 1.806 | 1.671 | 1.834 |
| Tg (°C) | 557 | 562 | 569 | 567 | 565 | 574 | 526 | 487 |
| Devitrification temperature (°C) | (1060) | (1040) | (1040) | (1090) | (1050) | (1020) | (1000) | 1400< |
| Specific gravity (g/cm$^3$) | 3.38 | 3.38 | 3.38 | 3.34 | 3.34 | 3.35 | 2.86 | 3.41 |
| Kc (MPa·m$^{1/2}$) | 0.61 | 0.58 | 0.58 | 0.58 | 0.57 | 0.57 | 0.78 | (0.89) |
| CIL (gf) | 23 | 17 | 20 | 15 | 17 | 22 | 58 | 16 |
| $T_{360}$ (%) | - | - | - | - | - | - | 80 | - |
| E (GPa) | 102 | 101 | 99 | 97 | 96 | 94 | 96 | 111 |
| RA (class) | - | - | - | - | - | - | - | - |
| RW (class) | - | - | - | - | - | - | - | - |

[Table 6-1]

| | Example 41 | Example 42 | Example 43 | Example 44 | Example 45 | Example 46 | Example 47 | Example 48 |
|---|---|---|---|---|---|---|---|---|
| $Nb_2O_5$ | 56.0 | 48.0 | 46.8 | 45.6 | 28.6 | 17.6 | 23.6 | 41.1 |
| $SiO_2$ | 21.0 | 32.6 | 31.7 | 30.9 | 33.6 | 40.8 | 38.8 | 31.6 |
| $TiO_2$ | 4.0 | 0.0 | 0.0 | 0.0 | 0.0 | 0.0 | 0.0 | 0.0 |
| $ZrO_2$ | 3.0 | 3.9 | 3.8 | 3.7 | 4.0 | 6.3 | 7.8 | 2.5 |
| $Li_2O$ | 7.9 | 4.8 | 4.6 | 4.5 | 3.9 | 6.1 | 8.7 | 4.9 |
| $Na_2O$ | 3.4 | 5.3 | 5.1 | 5.0 | 4.7 | 1.5 | 2.3 | 5.7 |
| $K_2O$ | 1.0 | 1.0 | 1.0 | 0.9 | 1.0 | 0.1 | 0.1 | 1.0 |
| ZnO | 2.0 | 0.0 | 0.0 | 0.0 | 0.9 | 12.3 | 2.1 | 0.0 |
| $P_2O_5$ | 0.0 | 0.0 | 0.0 | 0.0 | 0.9 | 12.3 | 2.1 | 0.0 |
| $B_2O_3$ | 0.0 | 0.0 | 0.0 | 0.0 | 4.5 | 0.0 | 0.0 | 1.4 |
| $La_2O_3$ | 0.0 | 0.0 | 0.0 | 0.0 | 10.5 | 4.1 | 12.3 | 0.0 |
| BaO | 0.0 | 2.2 | 2.2 | 2.1 | 2.5 | 0.0 | 0.0 | 0.0 |
| MgO | 0.0 | 0.0 | 0.0 | 0.0 | 0.0 | 0.0 | 0.0 | 0.0 |
| CaO | 1.0 | 0.0 | 0.0 | 0.0 | 0.0 | 1.4 | 4.3 | 0.0 |
| $Al_2O_3$ | 0.0 | 2.2 | 0.0 | 0.0 | 0.0 | 0.0 | 0.0 | 2.1 |
| $Y_2O_3$ | 0.6 | 0.0 | 0.0 | 0.0 | 3.6 | 5.8 | 0.0 | 0.0 |
| $WO_3$ | 0.0 | 0.0 | 4.8 | 0.0 | 0.0 | 0.0 | 0.0 | 0.0 |
| $Gd_2O_3$ | 0.0 | 0.0 | 0.0 | 7.3 | 0.0 | 0.0 | 0.0 | 0.0 |
| $Sb_2O_3$ | 0.1 | 0.0 | 0.0 | 0.0 | 0.0 | 0.0 | 0.0 | 0.0 |
| SrO | 0.0 | 0.0 | 0.0 | 0.0 | 2.2 | 4.0 | 0.0 | 0.0 |
| $Li_2O/(Li_2O+Na_2O+K_2O)$ | 0.584 | 0.432 | 0.430 | 0.433 | 0.406 | 0.792 | 0.784 | 0.423 |
| $Li_2O+Na_2O+K_2O$ | 15.0 | 11.1 | 10.7 | 10.4 | 9.6 | 7.7 | 11.1 | 11.6 |
| $Nb_2O_5-(La_2O_3+BaO)$ | 24.65 | 48.00 | 46.80 | 45.60 | 15.58 | 13.50 | 11.30 | 41.09 |
| $(Nb_2O_5-(La_2O_3+BaO)) \times (Li/(Li+Na+K))$ | 14.40 | 20.76 | 20.12 | 19.73 | 6.33 | 10.69 | 8.86 | 17.38 |
| $(Ln_2O_3+TiO_2+WO_3+Nb_2O_5+ ZrO_2+Bi_2O_3+ZnO) \times Li_2O$ | 518.24 | 249.12 | 254.95 | 254.70 | 185.81 | 281.10 | 398.46 | 262.31 |

[Table 6-2]

| | Example 41 | Example 42 | Example 43 | Example 44 | Example 45 | Example 46 | Example 47 | Example 48 |
|---|---|---|---|---|---|---|---|---|
| $n_d$ | 1.894 | 1.777 | 1.791 | 1.793 | 1.732 | 1.708 | 1.726 | 1.762 |
| Tg (°C) | 530 | 578 | 576 | 570 | 561 | 567 | 528 | 540 |
| Devitrification temperature (°C) | 1400< | 1100 | 1100 | 1150 | 1200 | 1270 | 1090 | 1080 |
| Specific gravity (g/cm³) | 3.62 | 3.27 | 3.38 | 3.48 | 3.47 | 3.43 | 3.34 | 3.33 |
| Kc (MPa·m$^{1/2}$) | (0.78) | (0.68) | (0.62) | (0.61) | (0.64) | 0.66 | (0.62) | (0.60) |
| CIL (gf) | 8 | (52) | (37) | (39) | 38 | 54 | (40) | (31) |
| T$_{360}$ (%) | - | - | - | - | 70 | - | - | - |
| E (GPa) | 115 | 102 | 103 | 104 | 106 | 110 | 106 | 100 |
| RA (class) | - | 1 | - | - | 1 | - | - | - |
| RW (class) | - | 1 | - | - | 1 | - | - | - |

Each of the optical glasses of the examples has the refractive index (nd) as high as 1.70 or more. In addition, each optical glass has high strength with the CIL value of 20 gf and excellent crack resistance with the Kc value of 0.60 $MPa \cdot m^{1/2}$ or more. Further, the press moldability is good because the glass transition temperature (Tg) is 500°C to 630°C, and the devitrification temperature is 1300°C or less. In addition, the specific gravity is 4.0 $g/cm^3$ or less, and therefore, cracks which can be an origin of breakage are unlikely to occur. Accordingly, it is suitable for an imaging lens or the like used for a vehicle-mounted camera which is exposed to harsh environment.

The glass enables a wide-angle, high-luminance, high-contrast, and improvement in light-guide properties of a device and a lens while securing strength, or a height of diffractive optical elements is designed to be low to make processing easy. The glass is therefore suitable for use for an action camera, a wearable device, an optical waveguide, a glass with projector, an optical waveguide with hologram, a glass with hologram, waveguide reflector array projector, a glass with diffractive optical elements, a virtual reality and augmented reality display device, an HMD device, a goggle-type display, a glasses-type display, a virtual image display device, and so on.

**Claims**

1.   An optical glass, having:

     a refractive index (nd) of 1.70 to 2.10;
     a glass transition point (Tg) of 500°C to 630°C;
     a devitrification temperature of 1300°C or less;
     a specific gravity of 4.0 $g/cm^3$ or less;
     a crack initiation load (CIL) of 20 gf or more; and
     a fracture toughness value (Kc) measured by an indentation fracture method based on JIS R1607 of 0.60 $MPa \cdot m^{1/2}$ or more.

2.   The optical glass according to claim 1, containing, in mass% based on oxides:

     $Nb_2O_5$: 20% to 75%;
     $SiO_2$: 22% to 50%;
     $TiO_2$: 0% to 7%;
     $ZrO_2$: 0% to 20%;
     $Li_2O$: 1% to 20%;
     $Na_2O$: 1% to 18%;
     $K_2O$: 0.1% to 10%;
     ZnO: 0% to 15%;
     $P_2O_5$: 0% to 5%;
     $B_2O_3$: 0% to 6%; and
     F: 0% to 5%, wherein
     $Li_2O + Na_2O + K_2O$ is 5% to 30%, and
     $Li_2O / (Li_2O + Na_2O + K_2O)$ is 0.4 or more.

3.   The optical glass according to claim 2, wherein
     ZnO is 0% to 10%, and $Li_2O / (Li_2O + Na_2O + K_2O)$ is 0.45 or more.

4.   The optical glass according to claim 2 or claim 3, further containing, in mass% based on oxides:

     $La_2O_3$: 0% to 15%;
     BaO: 0% to 4%, wherein
     $Nb_2O_5 - (La_2O_3 + BaO)$ is 10% to 75%.

5.   The optical glass according to claim 4, wherein in mass% based on oxides,
     $Nb_2O_5 - (La_2O_3 + BaO)$ is 30% to 75%.

6.   The optical glass according to claim 4 or claim 5, wherein in mass% based on oxides,
     $(Nb_2O_5 - (La_2O_3 + BaO)) \times Li_2O / (Li_2O + Na_2O + K_2O)$ is 5 or more.

7.   The optical glass according to any one of claims 4 to 6, wherein in mass% based on oxides,

$(Nb_2O_5 - (La_2O_3 + BaO)) \times Li_2O / (Li_2O + Na_2O + K_2O)$ is 20 or more.

8. The optical glass according to any one of claims 2 to 7, further containing, in mass% based on oxides:

$Ln_2O_3$: 0% to 15% (here, Ln is one or more selected from a group made up of Y, La, Gd, Yb, and Lu); and
$WO_3$: 0% to 10%, wherein
$(Nb_2O_5 + Ln_2O_3 + Ti_2O + ZrO_2 + WO_3 + ZnO) \times Li_2O$ is 500 or less.

9. The optical glass according to any one of claims 1 to 8, wherein
transmittance of light at a wavelength of 360 nm ($T_{360}$) of the optical glass formed into a glass plate with a thickness of 1 mm is 50% or more.

10. The optical glass according to any one of claims 1 to 9, wherein
water resistance is class 2 or more, and acid resistance is class 1 or more each measured based on Japanese Optical Glass Industrial Standards.

## INTERNATIONAL SEARCH REPORT

| International application No. |
| --- |
| PCT/JP2016/084716 |

A.  CLASSIFICATION OF SUBJECT MATTER

*C03C3/062*(2006.01)i, *C03C3/064*(2006.01)i, *C03C3/066*(2006.01)i, *C03C3/097*(2006.01)i, *C03C3/112*(2006.01)i, *G02B1/00*(2006.01)i

According to International Patent Classification (IPC) or to both national classification and IPC

B.  FIELDS SEARCHED

Minimum documentation searched (classification system followed by classification symbols)
C03C3/062-3/068, C03C3/076-3/097, C03C3/11-3/112, G02B1/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
INTERGLAD

C.  DOCUMENTS CONSIDERED TO BE RELEVANT

| Category* | Citation of document, with indication, where appropriate, of the relevant passages | Relevant to claim No. |
| --- | --- | --- |
| X | JP 2010-105897 A   (Ohara Inc.), 13 May 2010 (13.05.2010), paragraphs [0001] to [0002], [0008] to [0009], [0027] to [0033], [0037] to [0038], [0042], [0044], [0046] to [0048], [0053], [0064] to [0066], [0068], [0070]; example 12 (Family: none) | 1–10 |
| X | JP 2014-131948 A   (Ohara Inc.), 17 July 2014 (17.07.2014), paragraphs [0001], [0040], [0043] to [0044], [0048] to [0049], [0054] to [0056], [0058], [0060] to [0063], [0066], [0079] to [0080]; examples 18, 22, 24 to 27 & CN 103864293 A          & TW 201422554 A | 1–10 |

☒  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 January 2017 (23.01.17) | 07 February 2017 (07.02.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

24

**INTERNATIONAL SEARCH REPORT**

International application No.

PCT/JP2016/084716

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-169157 A (Schott AG.),<br>05 July 2007 (05.07.2007),<br>paragraphs [0001], [0015], [0019] to [0029],<br>[0035] to [0042]; example 4<br>& US 2007/149381 A1<br>paragraphs [0001], [0025], [0029] to [0040],<br>[0047], [0050] to [0057]; example 4<br>& DE 102006052787 A     & CN 1990405 A | 1-10 |
| A | JP 2011-37660 A (Ohara Inc.),<br>24 February 2011 (24.02.2011),<br>paragraphs [0001] to [0002], [0008] to [0009],<br>[0033] to [0040], [0044] to [0045], [0047],<br>[0052] to [0053], [0057], [0059] to [0060],<br>[0072], [0074], [0076]; example 8<br>(Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013256446 A